# DEMANDE DE BREVET EUROPEEN

(11) **EP 0 635 708 A1**
(43) Date de publication de la demande: **25.01.1995**
(21) Numéro de dépôt: 94401642.7
(22) Date de dépôt: 18.07.1994
(51) Int. Cl.: G01L 5/24

(54) **Appareil de contrôle de serrage de pièce par ultrasons et échantillonnage de signaux**

(30) Priorité: 22.07.1993 FR 9309034
(71) Demandeur: CENTRE TECHNIQUE DES INDUSTRIES MECANIQUES, F-60304 Senlis Cédex (FR)
(72) Inventeur: Flambard, Christian, F-60305 Aumont (FR); Desmet, Ken, B-1600 St. Pieters-Leeuw (BE)
(74) Mandataire: Bertrand, Didier

(57) **Abrégé**

Cet appareil de contrôle de serrage d'une pièce par ultrasons, comporte un émetteur (2) et un récepteur (3) de signaux ultrasonores et des moyens (14) d'analyse des signaux échantillonnés par un numériseur parallèle (12) pour servir de base au calcul de la valeur de serrage de la pièce ; un générateur de retard (7) est disposé dans l'ensemble d'émission (4) pour introduire un décalage dans le temps à chaque répétition de l'échantillonnage.

## Description

L'invention concerne le contrôle du serrage de pièce par ultrasons.

Le document FR-A-2 655 144 du CETIM fait connaître un appareil de contrôle de serrage d'une pièce par ultrasons, comportant :
- un émetteur de signaux ultrasonores commandé par un ensemble d'émission,
- un récepteur de signaux ultrasonores envoyant les signaux dans un ensemble de réception comportant un échantillonneur,
- et des moyens d'analyse des signaux échantillonnés pour servir de base au calcul de la valeur de serrage de la pièce par repérage d'un premier écho et d'un second écho en retour et intercorrélation entre ces deux échos.

De plus, des moyens introduisent un décalage dans le temps à chaque répétition de l'échantillonnage, ces moyens consistant en une ligne à retard programmable commandant l'échantillonneur.

La reconstitution d'un signal rapide qui se répète à une certaine cadence dans le temps est ainsi réalisée par un échantillonnage effectué avec un décalage dans le temps à chaque répétition, jusqu'au moment où ce signal est complètement décrit. Le décalage progressif à chaque répétition est obtenue en appliquant un retard de plus en plus grand sur l'échantillonnage à la réception du signal.

Cette méthode permet de compenser les performances limitées d'un étage électronique d'échantillonnage pour saisir un signal de fréquence relativement élevé lorsqu'il est possible de répéter celui-ci à l'identique à une cadence convenablement choisie.

Cependant, elle présente l'inconvénient de nécessiter un temps assez long pour réaliser l'acquisition complète du signal considéré.

En vue d'accélérer sa rapidité, on peut bien entendu faire appel aux échantillonneurs les plus rapides disponibles, par exemple aux échantillonneurs "flash" (numériseurs parallèles).

De la sorte, il est possible éventuellement de saisir non plus un seul point sur le signal à chaque répétition, mais plusieurs points. Par décalages successifs du déclenchement de la commande de l'échantillonneur flash, le signal peut être décrit plus rapidement.

Malheureusement, plus le signal de commande de l'échantillonnage est élevé en fréquence et plus il est difficile de le décaler dans le temps avec précision.

En effet, les retards sont obtenus au moyen de composants qui mettent en jeu des phénomènes de charge et de décharge de condensateurs. Aux fréquences élevées, ces phénomènes sont difficiles à gérer avec précision (courants intenses, tensions élevées).

Le décalage d'une commande à l'autre ne peut plus être assuré aussi régulier que voulu et il apparaît des variations incontrôlées qui se traduisent sous la forme d'un "bruit de phase".

On constate alors qu'il n'est plus possible d'utiliser la méthode en augmentant la cadence d'échantillonnage sans porter atteinte à sa performance en précision.

Le but de l'invention est de pallier ces difficultés en proposant un appareil de contrôle du type précité en tête de ce mémoire permettant une vitesse de mesure plus élevée.

L'invention atteint son but en prévoyant que les moyens de décalage ne sont plus placés sur l'échantillonneur mais consistent en un générateur de retard disposé dans l'ensemble d'émission commandant l'émetteur du capteur.

Ainsi, la solution conforme à l'invention consiste à maintenir fixe dans les temps le signal de commande haute fréquence d'échantillonnage et à décaler dans le temps le signal émis à chaque répétition d'un retard donné régulier.

Le signal est totalement décrit lorsqu'il subit un décalage total au moins égal à la période du signal de commande haute fréquence d'échantillonnage.

La fréquence de répétition du signal étant plus faible que la fréquence de commande d'échantillonnage, le décalage du signal dans le temps obtenu par retards successifs peut être réalisé avec une beaucoup plus grande précision.

D'autres avantages et caractéristiques de l'invention apparaîtront à la lecture de la description suivante. On se réfère au dessin unique annexé représentant sous forme de schéma un dispositif conforme à l'invention.

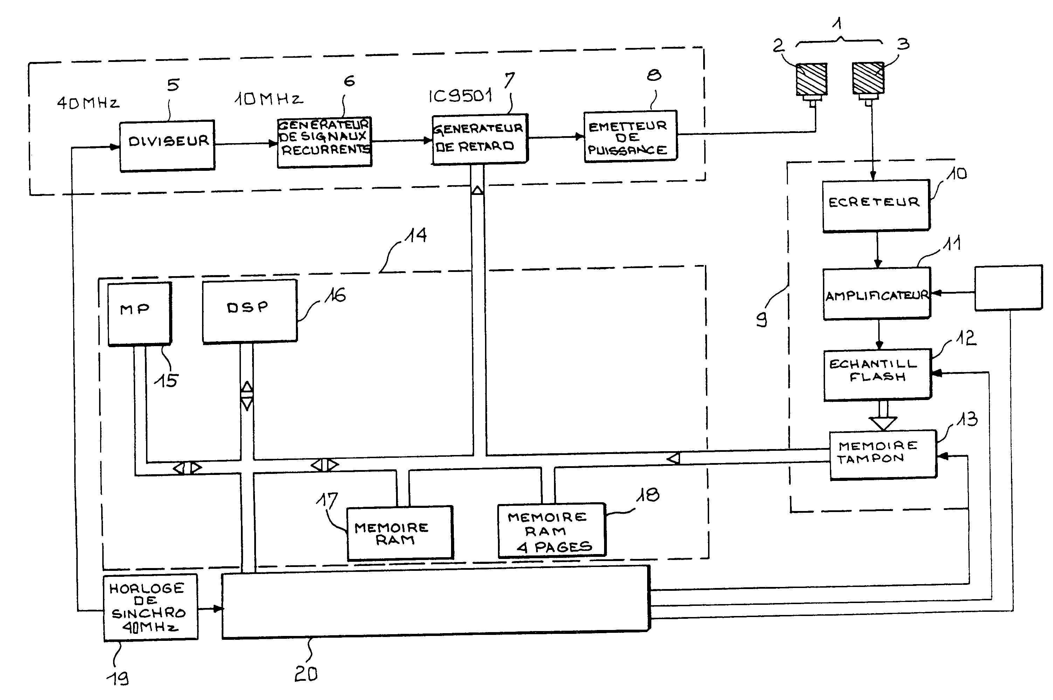

On a représenté sur la figure 1 le capteur 1 composé d'un émetteur 2 et d'un récepteur 3, dissociés (comme représenté) ou ne formant qu'une unité.

L'émission du signal ultrasonore est assurée par un ensemble 4 composé d'un diviseur 5, d'un générateur de signaux récurrents 6, d'un générateur de retard programmable 7, et d'un émetteur de puissance 8.

La réception du signal ultrasonore est assurée par un ensemble 9 composé d'un écrêteur 10, d'un amplificateur programmable 11, d'un échantillonneur rapide flash 12 et d'une mémoire tampon 13.

Des bus relient les ensembles 4 et 9 à un ensemble 14 de gestion à microprocesseur, comprenant un microprocesseur 15, une unité 16 de traitement de signal numérique (DSP), et des mémoires vives 17, 18.

Enfin, une horloge de synchronisation 19 et un ensemble de gestion du temps 20 permettent de fournir les références de temps aux ensembles précédents.

Le fonctionnement du dispositif est le suivant.

L'horloge 19, réglée sur 40 MHz émet un signal toutes les 25 ns. La fréquence est ramenée par le diviseur 5 à 10 MHz, et le générateur de signaux récurrents 6 (modulo-synchronisateur) permet de produire un signal de commande à une fréquence donnée (par exemple comprise entre 10 Hz et 100 kHz).

Le générateur de retard 7 permet par une commande digitale sur 8 bits (256 niveaux) de décaler le signal de commande d'un temps donné. Ce retard est construit à partir d'une rampe linéaire de durée allant de 2,5 ns à 10⁴ ns, ce qui correspond à des retards compris entre 2,5/256 soit environ 10⁻² ns à 10⁴/256 soit environ 40 ns. En choisissant par exemple une durée de 25,6 ns, les retards pourront être définis à 0,1 ns.

Le signal délivré par le générateur 7 est transmis à l'émetteur de puissance 8 qui commande l'émetteur 2 du capteur.

Le signal ultrasonore en retour est recueilli par le récepteur 3, écrêté puis amplifié dans les unités 10, 11 avant que le convertisseur analogique digital flash 12 (numériseur parallèle) n'échantillonne le signal sur 8 bits (256 niveaux) ; il saisit simultanément un ensemble d'échantillons à un intervalle de temps donné, par exemple 25 ns (fréquence d'échantillonnage de 50 MHz).

Ces échantillons sont transmis à la mémoire tampon 13 de type SYNC FIFO (premier entré premier sorti) qui peut mémoriser 2048 mesures. Cette mémoire 13 permet au convertisseur 12 d'aller chercher une nouvelle série de mesures tandis que l'unité 16 de traitement de signal va recueillir ces données à une cadence qui lui convient, cadence qui correspond à un intervalle de temps supérieur à celui séparant les prises d'échantillon, par exemple entre 60 et 80 ns. Pour récupérer les 2048 échantillons, il faut donc entre 122,88 µs et 163 µs, c'est-à-dire de l'ordre de 200 µs ce qui correspond à une fréquence de 50 kHz.

Passé ce temps de saisie des 2048 échantillons, il est possible de recommencer l'opération. Celle-ci est reprise mais cette fois après un léger décalage dans le temps de l'émission, introduit par le générateur de retard 7 par exemple 1 ns. Une nouvelle série d'échantillons est alors récupérée, avec 2048 nouveaux points du signal décalés de 1 ns par rapport à la série précédente.

On reprend ainsi l'opération successivement pour balayer par incréments de 1 ns tout l'intervalle de temps séparant dans échantillons (période du signal de commande de l'échantillonnage). Dans l'exemple donné où cet intervalle est de 25 ns, il faudra donc répéter 25 fois l'opération pour échantillonner tout le signal.

Le temps nécessaire pour réaliser ces 25 opérations dépendra bien entendu de la fréquence de répétition du signal. Pour les opérations de contrôle des matériaux par ultrasons, cette fréquence est choisie en fonction de la vitesse des ondes ultrasonores dans le milieu et de l'épaisseur du matériau à parcourir.

Cette fréquence de répétition est généralement assez faible ; elle est comprise par exemple entre 300 Hz et 10 kHz. La période de répétition est donc comprise entre 3 ms et 0,1 ms , ce qui veut dire que le signal peut être échantillonné dans les limites de temps suivantes : 2,5 ms et 75 ms.

Ceci permet de réaliser l'enregistrement complet du signal et les mesures de temps associées sur ce signal environ 10 à 400 fois par secondes.

La longueur d'analyse du signal dépend bien entendu du nombre de points enregistrés et de la valeur de l'incrément de retard appliqué sur le signal.

Pour l'exemple retenu de 2048 points enregistrés et un incrément de retard de 1 ns, on obtient 2048 ns.

A titre indicatif, une oscillation d'un signal de 5 MHz correspond à 0,2 µs, ce qui signifie que la longueur d'analyse permettra d'enregistrer environ une dizaine d'oscillations d'un tel signal.

## Revendications

1. Appareil de contrôle de serrage d'une pièce par ultrasons, comportant :
- un émetteur (2) de signaux ultrasonores commandé par un ensemble (4) d'émission,
- un récepteur (3) de signaux ultrasonores envoyant les signaux dans un ensemble (9) de réception comportant un échantillonneur (12)
- des moyens (14) d'analyse des signaux échantillonnés pour servir de base au calcul de la valeur de serrage de la pièce,
- des moyens pour introduire un décalage dans le temps à chaque répétition de l'échantillonnage, caractérisé en ce que lesdits moyens de décalage consistent en un générateur de retard (7) disposé dans l'ensemble d'émission (4).

2. Appareil selon la revendication 1, caractérisé en ce que l'échantillonneur (12) est un numériseur parallèle.
